**Europäisches Patentamt**

**European Patent Office**

**Office européen des brevets**

(19)

(11) Veröffentlichungsnummer: **0 279 048 B1**

# (12) EUROPÄISCHE PATENTSCHRIFT

(45) Veröffentlichungstag der Patentschrift:
**18.10.89**

(51) Int. Cl.⁴: **F41D 10/28, B65G 1/133**

(21) Anmeldenummer: **87118301.8**

(22) Anmeldetag: **10.12.87**

(54) Vorrichtung zum Zuführen von Munition aus einem Behälter zu einer Feuerwaffe.

(30) Priorität: **02.02.87  CH 362/87**

(43) Veröffentlichungstag der Anmeldung:
**24.08.88 Patentblatt 88/34**

(45) Bekanntmachung des Hinweises auf die Patenterteilung:
**18.10.89 Patentblatt 89/42**

(84) Benannte Vertragsstaaten:
**CH DE FR GB IT LI SE**

(56) Entgegenhaltungen:
**EP-A- 0 078 482**
**FR-A- 1 052 733**
**FR-E- 55 900**
**US-A- 4 503 750**

(73) Patentinhaber: **Werkzeugmaschinenfabrik Oerlikon-Bührle AG, Birchstrasse 155, CH-8050 Zürich(CH)**

(72) Erfinder: **Müller, Kurt, Masch. Tech., Schwandenholzstrasse 202, CH-8052 Zürich(CH)**
Erfinder: **Bohler, Erwin, Ing. HTL, Zwinggartenstrasse 51, CH-8600 Dübendorf(CH)**

## Beschreibung

Vorrichtung zum Zuführen von Munition aus einem Behälter zu einer Feuerwaffe.

Die Erfindung betrifft eine Vorrichtung zum Zuführen von Munition aus einem Behälter zu einer Feuerwaffe, wobei die Patronen sowohl nebeneinender als auch hintereinender angeordnet sind und sich in endlosen Speicherketten befinden.

Bei einem bekannten Munitionsmagazin dieser Art (siehe DE-A-3 200 726) ist eine Vielzahl von Reihen innerhalb einer Umhüllung gespeichert, ohne dass Trennwände zwischen den Reihen erforderlich sind. Das Magazin umfasst eine Deckplatte und eine Bodenplatte, die durch eine Vielzahl senkrecht dazu stehender Trennwände voneinander getrennt sind, sodass zwischen der Deck- und Bodenplatte eine Vielzahl von Munitionsspeichern und Führungskanälen gebildet werden. Eine endlose Gelenkkette ist in den Speicher- und Führungskanälen angeordnet und dient zur Förderung der gespeicherten Munition innerhalb der Speicher- und Führungskanäle zu einer Austrittsöffnung des Magazins. Die Gelenkkette ist so ausgebildet, dass sie mindestens zwei Reihen von Patronen hintereinander zwischen der Deck- und Bodenplatte halten kann, wobei sich die Längsachse einer jeden Patrone etwa rechtwinklig zur Deck- und Bodenplatte erstreckt.

Dieses bekannte Munitionsmagazin ist zwar in der Lage, auf wenig Raum relativ viele Patronen speichern zu können, aber mit der erwähnten Gelenkkette können die Patronen nur einer einzigen Entnahmeöffnung des Behälters zugeführt werden. Dieser Behälter kann daher nicht bei einer Waffe mit zwei Waffenrohren verwendet werden, da es nicht möglich ist, aus diesem Behälter beiden Waffenrohren gleichzeitig Patronen zuzuführen.

Die Aufgabe, welche mit der vorliegenden Erfindung gelöst werden soll, besteht in der Schaffung eines Munitionsmagazins, mit dem möglichst viel Munition zwischen den beiden Waffenrohren einer Zwillingskanone angeordnet werden kann.

Die Vorrichtung, mit der diese Aufgabe gelöst wird, ist dadurch gekennzeichnet, dass der Munitionsbehälter zwischen zwei Waffenrohren der Feuerwaffe angeordnet ist und - in Schussrichtung der Waffe gesehen - in einen vorderen ersten Behälter und einen hinteren zweiten Behälter unterteilt ist und in jedem Behälter eine endlose Speicherkette angeordnet ist, dass die Munition aus dem vorderen ersten Behälter über eine Vorrichtung zur axialen Verschiebung der Patrone und über eine endlose Förderkette dem einen Waffenrohr zuführbar ist und aus dem hinteren zweiten Behälter direkt über eine endlose Förderkette dem anderen Waffenrohr zuführbar ist.

Ein Ausführungsbeispiel der erfindungsgemässen Vorrichtung zum Zuführen von Munition aus einem Behälter zu einer Feuerwaffe ist im folgenden anhand der beigefügten Zeichnung ausführlich beschrieben. Es zeigt:

Fig.1 Grundriss
Fig.2 Aufriss
Fig.3 Seitenriss der Vorrichtung
Fig.4 eine schaubildliche Darstellung dieser Vorrichtung, und
Fig.5 einen Gleitstein in schaubildlicher Darstellung.

Das erfindungsgemässe Munitionsmagazin mit der Vorrichtung zum Zuführen der Patronen aus dem Behälter zur Feuerwaffe befindet sich zwischen zwei Feuerwaffen, welche jedoch in der Zeichnung nur angedeutet sind.

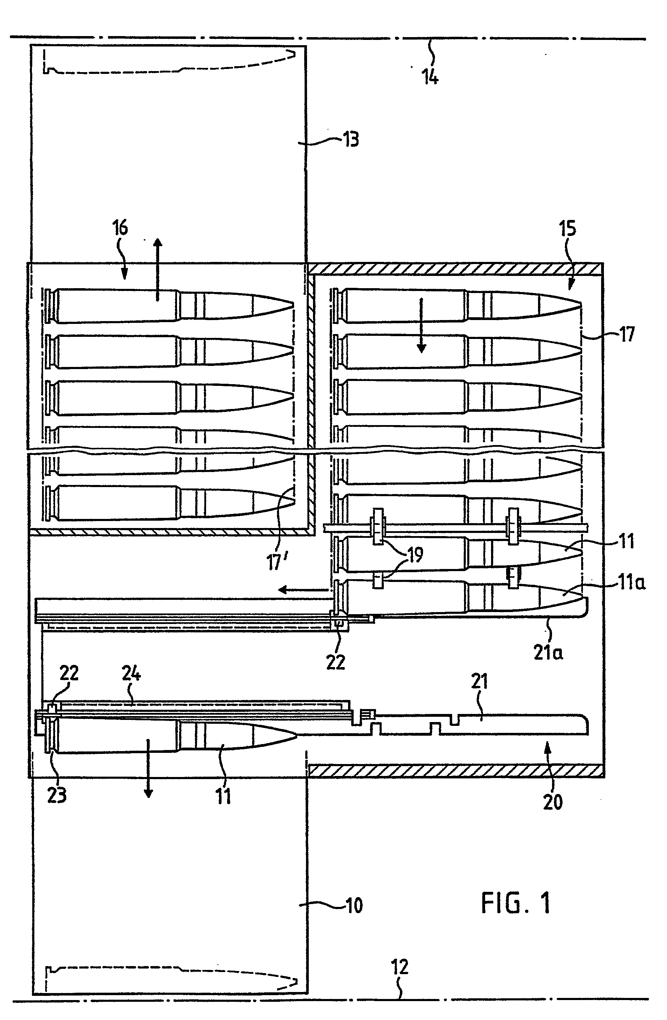

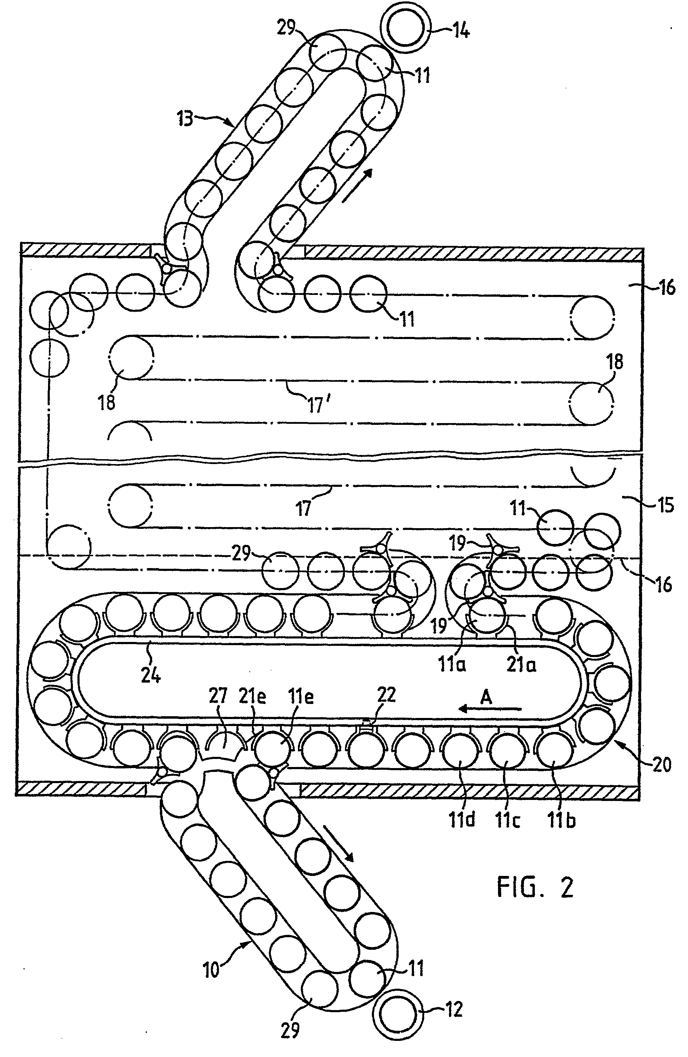

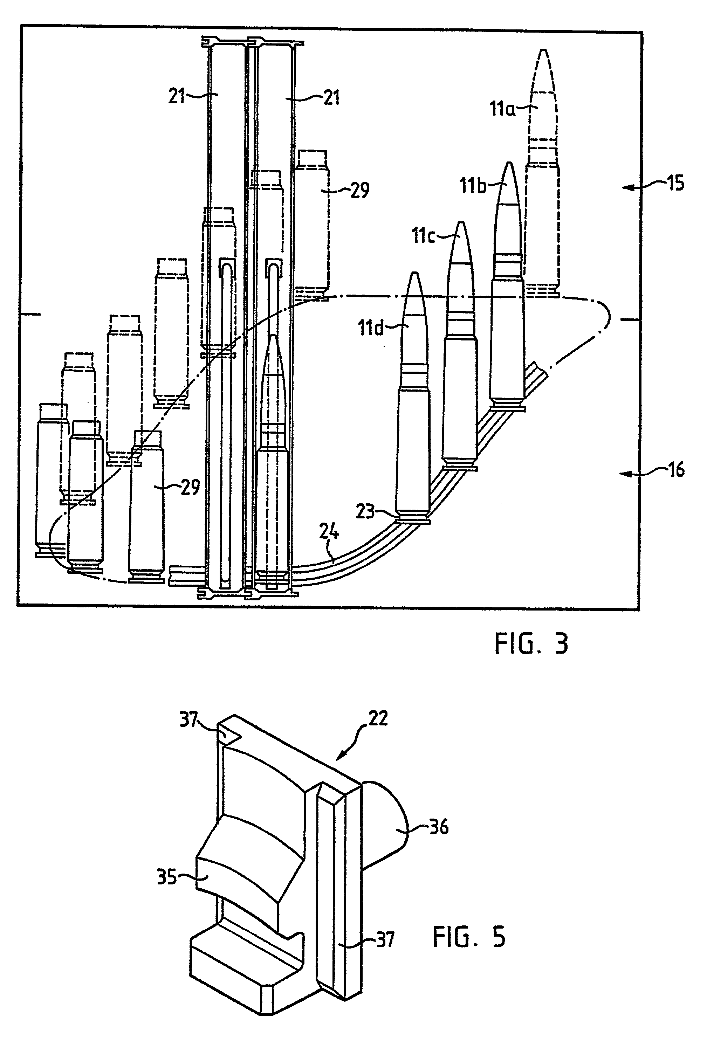

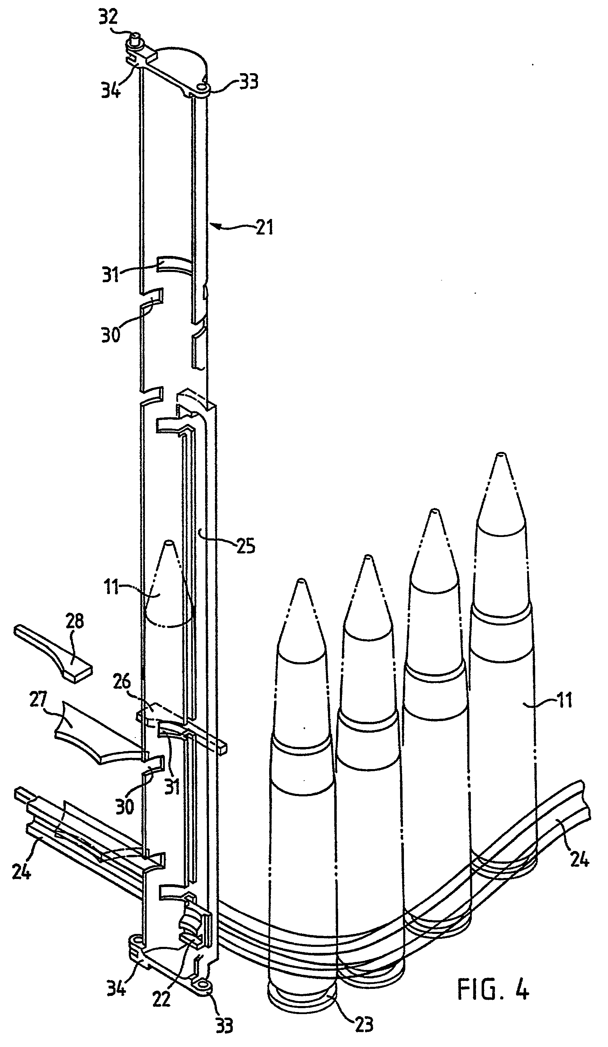

Gemäss Fig.1 führt eine erste endlose Förderkette 10 Patronen 11 zu einem ersten Waffenrohr 12, von welchem nur seine Achse sichtbar ist, und eine zweite endlose Kette 13 führt Patronen 11 zu einem zweiten Waffenrohr 14, von dem ebenfalls nur die Achse sichtbar ist. Die Patronen 11 für das erste Waffenrohr 12 werden aus einem ersten Behälter 15 und die Patronen 11 für das zweite Waffenrohr 14 werden aus einem zweiten Behälter 16 zugeführt, wobei -in Schussrichtung der Waffe gesehen - sich der erste Munitionsbehälter 15 vor dem zweiten Munitionsbehälter 16 befindet. Die Patronen 11 aus dem ersten Behälter 15 müssen zuerst in axialer Richtung nach hinten verschoben werden, bevor sie über die endlose Kette 10 dem ersten Waffenrohr 12 zugeführt werden können. Die Patronen 11 aus dem zweiten Behälter 16 können direkt aus einer endlosen Speicherkette ohne axiale Verschiebung über die zweite endlose Kette 13 dem zweiten Waffenrohr 14 zugeführt werden. Das erste Munitionsmagazin 15 weist eine endlose Speicherkette 17 auf, welche über eine Anzahl Umlenkräder 18 geführt ist. In dieser Speicherkette 17 befinden sich die im Magazin 15 zu speichernden Patronen 11. Mit Hilfe von Sternrädern 19 gelangen die Patronen 11 von der Speicherkette 17 auf eine Entnahmekette 20, die ebenfalls endlos ist und mit der die Patronen 11 aus dem Magazin 15 der Förderkette 10 zugeführt werden. Diese Entnahmekette 20 besteht aus einer Anzahl Becher 21, die wesentlich länger sind als eine einzelne Patrone 11. Gemäss Fig.1-3 werden die Patronen 11 dem Becher 21 an seinem oberen Ende aus dem Magazin 15 zugeführt. Anschliessend werden die Patronen 11 in den Bechern 21 axial verschoben und am unteren Ende der Becher 21 werden die Patronen 11 dem Becher 21 entnommen und der endlosen Förderkette 10 übergeben, welche die Patronen 11 - wie gesagt - dem Waffenrohr 12 zuführt. Anders gesagt wird, gemäss Fig.1-3, dem Becher 21a die Patrone 11a zugeführt und dem Becher 21e wird die Patrone 11e entnommen. Die Entnahmekette 20 bewegt sich in Richtung des Pfeiles A (Fig.2) und die im Becher 21a befindliche Patrone 11a gelangt von ihrer Zuführstelle in ihre Entnahmestelle, d.h. an die Stelle, in der sich in der Zeichnung der Becher 21e mit der Patrone 11e befindet. Auf diesem Wege wird die Patrone 11 im Becher 21 axial aus ihrer obersten Stellung in ihre unterste Stellung verschoben. Die Vorrichtung zur axialen Verschiebung einer Patrone 11 im Becher 21 ist am deutlichsten in Fig.4 dargestellt. Diese Vorrichtung weist einen Gleitstein 22 auf, der einerseits in eine Ausziehnut 23 der Patrone 11 eingreift und der anderseits in eine endlose Schiene 24 (Fig.4) eingreift, welche ortsfest im Munitionsmagazin 15 angeordnet ist. Dieser Gleitstein 22 ist ferner in einer Nut 25 des Bechers 21 verschiebbar geführt. Aus dieser Nut 25 des Bechers 21 kann der Gleitstein 22 nicht herausfallen. Wenn sich die endlose Entnahmekette 20 in Richtung des Pfeiles A bewegt, gleitet der Gleitstein 22 in der endlosen Schiene 24 und verschiebt sich in der Nut 25 des Bechers 21 und verschiebt dabei die Patrone 11 vom einen Ende des Bechers 21 zum anderen Ende. Zum Auskämmen der Patronen 11 aus der Entnahmekette 20 sind verschiedene Auskämmnocken 26,27 und 28 ortsfest angeordnet, welche einerseits dafür sorgen, dass die Patronen 11 aus der Entnahmekette 20 in die Förderkette 10 gelangen und anderseits, dass die leeren Hülsen 29 (Fig.3) aus der endlosen Förderkette 10 in die Entnahmekette 20 zurückgeführt werden. In den Bechern 21 sind entsprechende Nuten 30 und 31 vorhanden, in welche die erwähnten Auskämmnocken 26,27 und 28 eingreifen. Die Entnahmekette 20, die aus den Bechern 21 besteht, unterscheidet sich gegenüber einer bekannten Becherkette im wesentlichen nur dadurch, dass die einzelnen Becher 21 etwa doppelt so lang als üblich sind und eine axiale Verschiebung der Patronen 11 in den Bechern 21 ermöglichen. Diese Becher 21 sind gemäss Fig.3 und 4 durch Kettenbolzen 32 miteinander verbunden, welche in eine Oese 33 des einen Bechers 21 und in eine Lasche 34 des benachbarten Bechers 21 hineinragen.

Gemäss Fig.5 weist der Gleitstein 22 einen ersten Nocken 35 auf, der in die Ausziehnut 23 der Patrone 11 hineinragt, sowie einen Bolzen 36, der in die endlose Führungsschiene 24 hineinragt. Zwei Rippen 37 dienen zur Führung des Gleitsteines 22 in der Nut des Bechers 21.

Die Wirkungsweise der beschriebenen Vorrichtung ist wie folgt: Zum Füllen der beiden Munitionsmagazine oder Behälter 15 und 16 werden die fünf endlosen Ketten oder Becherketten 10,13,17,17' und 20 im Behälter 16 angetrieben. Den endlosen Förderketten 10 und 13 werden im Bereich der Waffen 12 und 14 Patronen 11 zugeführt. Diese Patronen 11 gelangen über die Entnahmekette 20 in die Speicherkette 17 des einen Behälters 15 und von der Förderkette 13 direkt in die Speicherkette 17' des anderen Behälters 16.

Beim Schiessen werden die Patronen 11 aus dem vorderen ersten Behälter 15 durch die Speicherkette 17 der Entnahmekette 20 zugeführt. Diese Entnahmekette 20 transportiert die Patronen 11 zur Förderkette 10, wobei die Patronen 11 in den Bechern 21 axial nach hinten verschoben werden. Ferner werden beim Schiessen die Patronen 11 aus dem hinteren zweiten Behälter 16 durch die Speicherkette 17' direkt der Förderkette 13 zugeführt. Von den beiden Förderketten 10 und 13 gelangen die Patronen ins entsprechende Waffenrohr 12 bzw. 14.

## Patentansprüche

1. Vorrichtung zum Zuführen von Munition aus einem Behälter zu einer Feuerwaffe, wobei die Patronen (11) im Behälter (15,16) sowohl nebeneinander als auch hintereinander angeordnet sind und sich in endlosen Speicherketten (17,17') befinden, dadurch gekennzeichnet, dass der Munitionsbehälter (15,16) zwischen zwei Waffenrohren (12,14) einer Feuerwaffe angeordnet ist und in Schussrichtung der Waffen (12,14) gesehen in einen vorderen ersten Behälter (15) und einen hinteren zweiten Behälter (16) unterteilt ist und in jedem Behälter (15,26) eine endlose Speicherkette (17 bzw. 17') angeordnet ist, dass die Munition (11) aus dem vorderen ersten Behälter (15) über eine Vorrichtung (20) zur axialen Verschiebung der Patronen (11) und über eine erste endlose Förderkette (10) dem einen Waffenrohr (12) zuführbar ist und aus dem hinteren zweiten Behälter (16) direkt über eine zweite endlose Förderkette (13) dem anderen Waffenrohr (14) zuführbar ist.

2. Vorrichtung nach Anspruch 1, dadurch gekennzeichnet, dass die Vorrichtung zur axialen Verschiebung der Patronen (11) eine endlose Entnahmekette (20) aufweist, welche aus einer Anzahl Becher (21) besteht, welche mindestens doppelt so lange sind als eine Patrone (11), dass diese Becher (21) eine Längsnut (25) aufweisen, in welcher ein Gleitstein verschiebbar geführt ist, und dass dieser Gleitstein (22) einerseits in eine Ausziehnut (23) der Patrone (11) hineinragt und anderseits in einer endlosen Führungsschiene (24) geführt ist, durch welche der Gleitstein (22) bei der Bewegung der Entnahmekette (20) in der Längsnut (25) der Becher (21) verschoben wird zur Verschiebung der Patronen (11) in axialer Richtung.

## Claims

1. Apparatus for feeding ammunition from a holder to a gun, wherein the cartridges (11) are arranged in the holder (15, 16) both alongside and behind one another and are located in continuous storage tracks (17, 17`), characterised in that the ammunition holder (15, 16) is arranged between two barrels (12, 14) of a gun and, viewed in the direction in which the guns (12, 14) are fired, is subdivided into a front first holder (15) and a rear second holder (16), and a continuous storage track (17 and 17` respectively) is arranged in each holder (15, 16), and in that the ammunition (11) from the front first holder (15) can be fed via a device (20) for axial displacement of the cartridges (11) and via a first continuous conveyor track (10) to one of the barrels (12), and from the rear second holder (16) direct to the other barrel (14) via a second continuous conveyor track (13).

2. Apparatus according to claim 1, characterised in that the device for axial displacement of the cartridges (11) has a continuous take-off track (20) consisting of a number of cups (21) which are at least twice as long as a cartridge (11), that these cups (21) have a longitudinal groove (25) in which a slider (22) is displaceably set, and that said slider (22) on the one hand projects into a cannelure (23) of the cartridge (11) and on the other hand is set in a continuous guide rail (24), which as the take-off track (20) moves in the longitudinal groove (25) of the cups (21) displaces the slider (22) to shift the cartridges (11) in the axial direction.

## Revendications

1. Dispositif pour amener des munitions d'un magasin à une arme à feu, les cartouches (11), dans le magasin (15, 16), étant disposées aussi bien les unes à côté des autres que les unes derrière les autres et se trouvant dans des chaînes sans fin (17, 17`) d'emmagasinage, dispositif caractérisé en ce que le magasin (15, 16) à munitions est disposé entre deux canons (12, 14) d'une arme à feu et, vu dans la direction du tir des armes (12, 14), est divisé en un premier magasin (15) antérieur et un second magasin (16) postérieur, et dans chaque magasin (15, 16) est montée une chaîne sans fin (17 ou 17`) d'emmagasinage, en ce que les munitions (11) peuvent être amenées du premier magasin (15) antérieur à l'un des canons (12) de l'arme par l'intermédiaire d'un dispositif (20) servant au déplacement axial des cartouches (11) et par l'intermédiaire d'une première chaîne transporteuse sans fin (10), et peuvent être amenées du second magasin (16) postérieur à l'autre canon (14) de l'arme directement par une seconde chaîne transporteuse sans fin (13).

2. Dispositif selon la revendication 1, caractérisé en ce que le dispositif prévu pour déplacer en direction axiale les cartouches (11) comporte une chaîne d'enlèvement (20) sans fin, constituée par un certain nombre de godets (21), qui sont au moins deux fois plus longs qu'une cartouche (11), en ce que ces godets (21) présentent une rainure longitudinale (25), dans laquelle un coulisseau est guidé de façon à pouvoir se déplacer, et en ce que ce coulisseau (22) d'une part pénètre dans une rainure d'extraction (23) de la cartouche (11) et d'autre part passe dans un rail de guidage (24) sans fin, grâce auquel le coulisseau (22), lorsque la chaîne d'enlèvement (20) est en mouvement, est déplacé dans la rainure longitudinale (25 des godets (21), pour assurer le déplacement des cartouches (11) en direction axiale.

FIG. 1

FIG. 2

FIG. 3

FIG. 5

FIG. 4